# EUROPÄISCHE PATENTSCHRIFT

(11) **EP 2 384 951 B1**
(45) Veröffentlichungstag und Bekanntmachung des Hinweises auf die Patenterteilung: **28.08.2013**
(21) Anmeldenummer: 11003564.9
(22) Anmeldetag: 02.05.2011
(51) Int. Cl.: B62B 3/06, B62B 5/06, B62D 51/00, B62D 51/02

(54) **Deichsel eines deichselgeführten Flurförderzeugs**
Tow bar for an industrial truck
Timon d'un chariot de manutention

(30) Priorität: 04.05.2010 DE 102010019225
(43) Veröffentlichungstag der Anmeldung: 09.11.2011
(73) Patentinhaber: STILL SAS, 77716 Serris Marne La Vallee - Cedex 4 (FR)
(72) Erfinder: Wident, Alain, 60480 Montfermeil (FR)
(74) Vertreter: Geirhos, Johann

(56) Entgegenhaltungen:
- EP-A1- 1 238 896
- EP-A1- 2 050 651
- DE-A1- 10 159 565
- DE-A1-102006 001 689

## Beschreibung

Die Erfindung betrifft eine Deichsel eines deichselgeführten Flurförderzeugs, insbesondere Hubwagen, die einen Deichselfuß, einen Deichselschaft und einen Deichselkopf umfasst, wobei die Deichsel mittels des Deichselfußes an einem Antriebsteil des Flurförderzeugs um eine im Wesentlichen vertikale Schwenkachse schwenkbar gelagert ist, und die Deichsel zur Längenverstellung als klappbare Deichsel ausgebildet ist, wobei der Deichselschaft einen zweiteiligen Aufbau mit einem deichselfußnahen Teil und einem deichselkopfnahen Teil aufweist, wobei der deichselfußnahe Teil an dem Deichselfuß um eine im Wesentlichen horizontale Schwenkachse verschwenkbar gelagert ist und der deichselkopfnahe Teil über ein Schwenkgelenk mit einer im Wesentlichen horizontalen Schwenkachse an dem deichselfußnahen Bereich verschwenkbar gelagert ist.

Deichselgeführte Flurförderzeuge sind als Hubwagen, insbesondere Niederhubwagen oder Hochhubwagen, und Kommissionierer bekannt. Mit der an dem Antriebsteil um die vertikale Schwenkachse schwenkbaren Deichsel erfolgt die Bedienung des Flurförderzeugs, wobei durch Verschwenken der Deichsel um die vertikale Schwenkachse ein Antriebsrad des Flurförderzeugs gelenkt werden kann und mittels Bedienelementen, beispielsweise Drehschaltem oder Tastschaltern, an dem Deichselkopf ein Fahrantrieb und ein Hubantrieb des Flurförderzeugs gesteuert werden kann. An dem Deichselkopf sind in der Regel noch weitere Bedienelemente angeordnet, beispielsweise ein Sicherheitsschalter und ein Betätigungsschalter für eine als Hupe ausgebildete Signaleinrichtung.

Es ist bereits bekannt, bei derartigen Flurförderzeugen klappbare oder knickbare Deichseln vorzusehen, um einen Betrieb des Flurförderzeugs mit kurzer Deichsel und einen Betrieb mit langer Deichsel zu ermöglichen. Bevorzugt werden derartige, auch als Kombi-Deichseln, bezeichnete Deichseln in Flurförderzeugen eingesetzt, die sowohl im Mitgängerbetrieb als auch im Mitfahrerbetrieb betrieben werden können. Für den Mitfahrerbetrieb weist ein derartiges Flurförderzeug ein Fahrerplatzmodul mit einer klappbaren Fahrerstandplattform und gegebenenfalls klappbaren Seitenbügel auf, die einer auf der ausgeklappten Fahrerstandplattform stehenden Bedienperson in seitlicher Richtung zusätzlichen Halt geben. Für den Mitgängerbetrieb ist die Fahrerstandplattform eingeklappt.

Gattungsgemäße Deichseln, die als klappbare oder knickbare Deichseln ausgebildet sind und einen über ein Schwenkgelenk verbundenen zweiteiligen Deichselschaft aufweisen, um eine kurze Deichsel und eine lange Deichsel zu ermöglichen, sind beispielsweise aus der DE 10 2006 001 689 A1, auf der der Oberbegriff des Anspruchs 1 basiert, und der EP 2 050 651 A1 bekannt.

Bei den bekannten klappbaren Deichseln sind in der Regel zwei Verriegelungseinrichtungen vorgesehen, mit denen das Schwenkgelenk zwischen dem deichselfußnahen Teil und dem Deichselfuß bzw. das Schwenkgelenkt zwischen dem deichseißfußnahen Teil und dem deichselkopfnahen Teil des zweiteiligen Deichselschaftes beim Verstellen der Deichsel zwischen einer langen Stellung und einer kurzen Stellung arretiert und festgesetzt werden muss. Beim Verstellen der Deichsel zwischen einer kurzen Stellung und der langen Stellung ist bei der DE 10 2006 001 689 A1 und der EP 2 050 651 A1 die Deichsel ausgehend von einer geneigten Bedienstellung in eine senkrechte Stellung aufzurichten, um die entsprechenden Verriegelungseinrichtungen betätigen zu können und die Deichsel zwischen der langen Stellung und der kurzen Stellung umstellen zu können, und anschließend wieder in eine Bedienstellung herabzuschwenken. Da die senkrechte Stellung der Deichsel einen Bremsbereich bildet, in dem aus Sicherheitsgründen eine Bremseinrichtung, beispielsweise eine Feststellbremse, des Flurförderzeugs aktiviert wird, kann die Deichsel nur bei stehendem Flurförderzeug zwischen der Stellung mit langer Deichsel und der Stellung mit kurzer Deichsel verstellt werden. Insbesondere im Mitgängerbetrieb beim Betrieb des Flurförderzeugs in engen Lagern bei beengten Platzverhältnissen ist jedoch von der Bedienperson ein schneller Wechsel der Stellung der Deichsel zwischen der Stellung mit langer Deichsel und kurzer Deichsel erwünscht. Mit den bekannten klappbaren Deichsel ist aufgrund des Durchlaufens des Bremsbereichs bei senkrecht stehender Deichsel und der Betätigung der entsprechenden Verriegelungseinrichtungen ein bedienungsfreundlicher und schneller Wechsel zwischen den beiden Stellungen der Deichsel nicht möglich. Darüber hinaus führt das Durchlaufen der senkrechten Stellung der Deichsel beim Wechsel zwischen der kurzen Deichsel und der langen Deichsel und das Aufrichten sowie Absenken der Deichsel aufgrund der erforderlichen Schwenkbewegungen zu einer langen, kreisförmigen Bewegungsbahn des Deichselkopfes, bei der weiterhin aufgrund des Aufrichtens und Absenkens der Deichsel eine starke Änderung der Orientierung und der Winkellage des Deichselkopfes mit den daran angeordneten Bedienungselementen auftritt, so dass sich eine ungünstige Ergonomie beim Verstellen der Deichsel zwischen der langen und der kurzen Stellung ergibt. Bei den bekannten klappbaren Deichseln stellt sich zudem in der Stellung mit kurzer Deichsel und der Stellung mit langer Deichsel ein unterschiedliches Schwenkverhalten des Deichselkopfes zwischen einer waagerechten Position und einer senkrechten Position ein. Bei langer Deichsel ist bei den bekannten klappbaren Deichseln das Schwenkgelenkt zwischen dem deichselfußnahen Teil und dem deichselkopfnahen Teil arretiert, so dass der Deichselkopf um die an dem Deichselfuß angeordnete Schwenkachse zwischen der waagerechten Position und der senkrechten Position mit der ganzen Länge des Deichselschaftes verschwenkt. Bei kurzer Deichsel ist das Schwenkgelenk zwischen dem Deichselfuß und dem deichselfußnahen Teil arretiert, so dass der Deichselkopf um das zwischen dem deichselfußnahen Teil und dem deichselkopfnahen Teil angeordnete Schwenkgelenk zwischen der waagerechten Position und der senkrechten Position mit einem verkürzten Schwenkarm verschwenkt. Dieses veränderte Schwenkverhalten des Deichselkopfes in den beiden Stellungen der Deichsel führt weiterhin zu einer ungünstigen Ergonomie und unterschiedlichem Bedienverhalten.

Der vorliegenden Erfindung liegt die Aufgabe zugrunde, eine Deichsel der eingangs genannten Gattung zur Verfügung zu stellen, die eine verbesserte Ergonomie aufweist, einen bedienungsfreundlichen und schnellen Wechsel der Deichsel zwischen der Stellung mit langer Deichsel und kurzer Deichsel ermöglicht und eine Verstellung zwischen der langen und der kurzen Stellung im Fahrbetrieb ermöglicht.

Diese Aufgabe wird erfindungsgemäß dadurch gelöst, dass das Schwenkgelenk zwischen dem deichselfußnahen Teil und dem deichselkopfnahen Teil von einem Lagerbock gebildet ist, der über eine Parallelführungseinrichtung mit dem Deichselfuß gekoppelt ist, und der deichselkopfnahe Teil an dem Lagerbock um die horizontale Schwenkachse verschwenkbar gelagert ist. Gemäß der Erfindung ist das die horizontale Schwenkachse zwischen dem deichselfußnahen Teil und dem deichselkopfnahen Teil des Deichselschaftes bildende Schwenkgelenk von einem Lagerbock gebildet, der über eine Parallelführungseinrichtung mit dem Deichselfuß gekoppelt ist, so dass beim Verstellen der Deichsel zwischen der Stellung mit langer Deichsel und kurzer Deichsel, bei der zur Längenverstellung der Deichsel der deichselfußnahe Teil um die an dem Deichselfuß angeordneten horizontale Schwenkachse verschwenkt wird, keine Änderung der Orientierung und Winkellage des Lagerbockes erfolgt und eine Zwangsführung des Lagerbocks erzielt wird. Durch diese Parallelführung und Zwangsführung des Lagerbocks, an dem der deichselkopfnahe Bereich verschwenkbar gelagert ist, wird somit erzielt, dass die Orientierung und die Winkellage des Deichselkopf beim Verstellen zwischen der kurzen Stellung und langen Stellung unverändert und konstant bleibt, so dass der Deichselkopf beim Verstellen der Deichsel lediglich eine Längenänderung mit einer kurzen, linearen Bewegungsbahn durchführt, jedoch keine Schwenkbewegungen des Deichselkopfes auftreten. Hierdurch wird beim Verstellen der Deichsel zwischen der kurzen Stellung und der langen Stellung eine günstige Ergonomie erzielt, bei der die Bedienperson durch die lineare Bewegungsbahn des Deichselkopfes keine Änderungen der den Deichselkopf bedienenden Handposition durchführen muss, wodurch sich eine bedienungsfreundliche Änderung der Deichselstellung zwischen der langen Stellung und der kurzen Stellung erzielen lässt. Die durch die Parallelführung des Lagerbocks erzielbare kurze Bewegungsbahn des Deichselkopfes ergibt zudem einen schnellen Wechsel der Deichsel zwischen der langen Stellung und der kurzen Stellung. Zudem ist durch die Parallelführung und Zwangsführung des Lagerbocks bei der erfindungsgemäßen Deichsel kein Durchlaufen der senkrechten Deichselstellung beim Wechsel zwischen der kurzen Stellung und der langen Stellung der Deichsel erforderlich, so dass die Deichsel zwischen einer langen und einer kurzen Stellung während des Fahrbetriebs des Flurförderzeugs verstellt werden kann. Durch die Parallelführung und Zwangsführung des Lagerbocks kann zudem eine Verriegelungseinrichtung für den deichselkopfnahen Teil entfallen, so dass die Bedienungsfreundlichkeit weiter verbessert und ein schneller Wechsel zwischen der kurzen Stellung und langen Stellung der Deichsel durch eine verringerten Bedienungsaufwand erzielbar ist. Der deichselkopfnahe Teil ist bei der erfindungsgemäßen Deichsel an dem parallelgeführten Lagerbock sowohl in der Stellung mit kurzer Deichsel als auch in der Stellung mit langer Deichsel um die horizontale Schwenkachse verschwenkbar, so dass der Deichselkopf ein einheitliches Schwenkverhalten zwischen einer waagerechten Position und einer senkrechten Position in beiden Deichselstellungen aufweist, wodurch die Ergonomie durch ein einheitliches Bedienverhalten weiter verbessert wird.

Gemäß einer vorteilhaften Weiterbildung der Erfindung ist der deichselkopfnahe Teil in dem Lagerbock zwischen einem ersten Anschlag für die abgesenkte Stellung des Deichselkopfes und einem zweiten Anschlag für die angehobene Stellung des Deichselkopfes verschwenkbar. Mit derartigen Anschlägen an dem zwangsgeführten Lagerbock kann auf einfache Weise der mit dem Deichselkopf versehene deichselkopfnahe Teil der klappbaren bzw. knickbaren Deichsel sowohl in der kurzen Stellung der Deichsel als auch in der langen Stellung der Deichsel zwischen der abgesenkten, im Wesentlichen waagerechten Stellung des Deichselkopfes, und der angehobenen, im Wesentlichen senkrechten Stellung des Deichselkopfes um die horizontale Schwenkachse verschwenkt werden. Sofern die abgesenkte Stellung des Deichselkopfes und/oder die angehobene Stellung des Deichselkopfes als Bremsbereich ausgebildet ist, in dem eine Feststellbremseinrichtung betätigt wird oder die Fahrgeschwindigkeit bzw. die Beschleunigung des Fahrantriebs beeinflusst wird, kann hierbei ein einheitliches Bedienverhalten sowohl in der Stellung mit langer Deichsel als auch in der Stellung mit kurzer Deichsel erzielt werden, das sich günstig auf die Ergonomie und die Bedienungsfreundlichkeit auswirkt.

Besondere Vorteile sind erzielbar, wenn der deichselfußnahe Bereich an dem Deichselfuß zwischen einem ersten Anschlag für eine kurze Deichsel und einem zweiten Anschlag für eine lange Deichsel um die horizontale Schwenkachse verschwenkbar gelagert ist. Mit derartigen Anschlägen kann die Stellung des deichselfußnahen Teils der Deichsel sowohl in der kurzen Stellung der Deichsel mit eingeklapptem und somit an- bzw. abgewinkeltem deichselfußnahen Teil, und in der langen Stellung der Deichsel mit ausgeklapptem und somit gestrecktem deichselfußnahen Teil auf einfache Weise begrenzt werden.

Die Parallelführungseinrichtung ermöglicht hierbei bei der Betätigung der Deichsel zwischen der langen Stellung und der kurzen Stellung und der hierbei auftretenden Schwenkbewegung des deichselfußnahen Teils um die horizontalen Schwenkachse zwischen dem deichselfußnahen Teil und dem Deichselfuß eine Parallelführung des Deichselkopfes mit einer Linearbewegung des Deichselkopfes mit einer kurzen Bewegungsbahn. Beim Verstellen der Deichsel zwischen der kurzen Stellung mit abgewinkeltem deichselfußnahen Teil und der langen Stellung mit gestrecktem deichselfußnahen Teil tritt somit keine Schwenkbewegung des Deichselkopfes auf, sondern eine Linearbewegung des Deichselkopfes mit einem kurzen Bewegungsweg, die der gewünschten Längenveränderung der Deichsel entspricht. Hierdurch wird ein schneller Wechsel der Deichsel zwischen der Stellung mit langer Deichsel und kurzer Deichsel ermöglicht. Weiterhin ergibt sich hierdurch eine günstige Ergonomie, da die Bedienperson beim Betätigen der Deichsel zwischen der langen Stellung und der kurzen Stellung keine Veränderungen der Handposition durchführen muss, mit der die Bedienperson den Deichselkopf hält und bedient, so dass die erfindungsgemäße Deichsel bei gleichbleibender Handposition zwischen der langen Stellung und der kurzen Stellung verstellt werden kann.

Die Parallelführungseinrichtung kann von entsprechenden Parallelogrammhebeln gebildet werden, die jeweils mit einem Ende an dem Deichselfuß und mit dem anderen Ende an dem Lagerbock für den deichselkopfnahen Bereich angeordnet sind. Gemäß einer vorteilhaften Ausführungsform der Erfindung ist die Parallelführungseinrichtung von einem Zugmitteltrieb gebildet. Mit einem Zugmitteltrieb kann ein einfacher und platzsparender Aufbau und ein geringer Herstellaufwand für die Parallelführungseinrichtung erzielt werden.

Der Zugmitteltrieb kann von einem kraftschlüssigen Zugmitteltrieb gebildet werden, beispielsweise einem Riementrieb mit einem Flachriemen oder Keilriemen als Zugmittel, das über entsprechende Riemenscheiben an dem Lagerbock und dem Deichselfuß geführt ist. Mit einer Spannrolle für das Zugmittel kann hierbei ein Durchrutschen verhindert werden, um die Parallelführung und Zwangsführung des Lagerbocks sicherzustellen. Sofern der Zugmitteltrieb als formschlüssiger Zugmitteltrieb ausgebildet ist, kann die Parallelführung und Zwangsführung des Lagerbocks mit verringertem Bauaufwand erzielt werden. Ein formschlüssiger Zugmitteltrieb kann beispielsweise von einem Zahnriementrieb mit einem Zahnriemen und entsprechend profilierten Zahnrädern an dem Deichselfuß sowie dem Lagerbock gebildet werden. Gemäß einer bevorzugten Ausgestaltungsform der Erfindung ist der Zugmitteltrieb als Kettentrieb ausgebildet mit einem an dem Deichselfuß angeordneten Kettenrad und einem an dem Lagerbock angeordneten Kettenrad sowie einer die beiden Kettenräder umschlingenden Kette. Ein derartiger Kettentrieb weist einen einfachen Aufbau mit geringen Herstellkosten auf und benötigt einen geringen Bauraumbedarf an der klappbaren Deichsel.

Gemäß einer vorteilhaften Ausgestaltungsform der Erfindung ist eine kraftschlüssige Arretierungsvorrichtung zur Arretierung der Deichsel in der kurzen Stellung und/oder der Deichsel in der langen Stellung vorgesehen. Mit einer derartigen Arretierungseinrichtung kann der deichselfußnahe Teil der klappbaren Deichsel auf einfache Weise an den entsprechenden Anschlägen an dem Deichselfuß gehalten werden.

Mit besonderem Vorteil ist die kraftschlüssige Arretierungsvorrichtung von einer Gasdruckfeder gebildet, die mit einem ersten Ende an dem Deichselfuß und mit einem zweiten Ende an dem Lagerbock angelenkt ist. Sofern die Gasdruckfeder hierbei den deichselfußnahen Teil der Deichsel in der eingeklappten Stellung für die kurze Deichsel und die ausgeklappten Stellung für die lange Stellung im Sinne einer Totpunktverriegelung verriegelt, kann eine einfache Arretierung des deichselfußnahen Teil an den beiden Anschlägen erzielt werden und bei der Verstellbewegung der Deichsel zwischen der langen und der kurzen Stellung nach der Kompression der Gasfeder bei Bewegungsbeginn ein Ausfahren der Gasfeder beim Bewegungsende erzielt werden, so dass am Bewegungsende durch die Gasdruckfeder eine Kraftunterstützung erzielbar ist und die Bedienkräfte von der Bedienperson zum Verstellen der Deichsel verringert werden bzw. entfallen können. Hierdurch werden die Bedienungsfreundlichkeit und die Ergonomie weiter erhöht.

Gemäß einer zweckmäßigen Weiterbildung der Erfindung ist eine formschlüssige Arretierungsvorrichtung zur Arretierung der Deichsel in der kurzen Stellung und/oder der Deichsel in der langen Stellung vorgesehen. Mit einer derartigen formschlüssigen Verriegelungseinrichtung kann bevorzugt die Deichsel in der kurzen Stellung arretiert und verriegelt werden. Bei einem Flurförderzeug mit einer klappbaren Fahrerstandplattform befindet sich die Deichsel während des Mitfahrerbetriebs bei einer auf der ausgeklappten Fahrerstandplattform stehenden Bedienperson in der kurzen Stellung. Da das Flurförderzeug im Mitfahrerbetrieb gegenüber dem Mitgängerbetrieb, bei dem der Höchstwert der Fahrgeschwindigkeit auf 4 bis 6 km/h begrenzt ist, mit einem erhöhten Höchstwert der Fahrgeschwindigkeit im Bereich von 8 bis 12 km/h betrieben werden kann, kann durch eine Verriegelung der Deichsel in der kurzen Stellung eine hohe Betriebssicherheit erzielt werden. Da bei der erfindungsgemäßen Deichsel aufgrund der Parallelführung und Zwangsführung des Lagerbocks keine weitere Verriegelungseinrichtung für das Schwenkgelenk zwischen dem deichselkopfnahen Teil und dem deichselfußnahen Teil erforderlich ist, ergibt sich eine hohe Bedienungsfreundlichkeit und ist ein schneller Wechsel der Deichsel zwischen der kurzen und der langen Stellung erzielbar, da beim Wechsel von der kurzen Stellung in die lange Stellung der Deichsel lediglich die formschlüssige Verriegelungseinrichtung zu lösen ist.

Die formschlüssige Arretierungsvorrichtung umfasst gemäß einer bevorzugten Ausführungsform der Erfindung einen an dem deichselfußnahen Teil angeordneten Rasthaken, der mit einer Rastausnehmung in dem Deichselfuß zusammenwirkt. Mit einem derartigen Rasthaken kann insbesondere die Deichsel in der kurzen Stellung bei eingeklapptem deichselfußnahen Teil auf einfache Weise an dem Deichselfuß formschlüssig verriegelt werden.

Besondere Vorteile ergeben sich, wenn der Rasthaken federbeaufschlagt ist und mittels eines an dem deichselfußnahen Teil angeordneten Handhebels betätigbar ist. Durch eine Feder kann der Rasthaken auf einfache Weise in eine Verriegelungsstellung zur Verriegelung des deichselfußnahen Teils, bevorzugt in der kurzen Stellung der Deichsel, an dem Deichselfuß beaufschlagt werden. Zum Verstellen der Deichsel ausgehend von der kurzen Stellung in die lange Stellung ist somit von der Bedienperson lediglich der Handhebel zu betätigen, um den Rasthaken in die Lösestellung zu betätigen. Sofern an dem Deichselfuß angrenzend an die Rastausnehmung eine Führungskulisse für den Rasthaken ausgebildet ist, an der der Rasthaken beim Verstellen der Deichsel von der langen Stellung in die kurze Stellung geführt ist, kann erzielt werden, dass der federbeaufschlagte Rasthaken ohne zusätzlichen Bedienungsaufwand beim Verstellen der Deichsel von der langen Stellung in die kurze Stellung in die Rastausnehmung geführt und automatisch bei Erreichen der kurzen Stellung durch die Feder in der Verriegelungsstellung verriegelt wird, so dass beim Verstellen der Deichsel von der langen Stellung in die kurze Stellung kein zusätzliches Betätigen der Arretierungsvorrichtung durch die Bedienperson erforderlich ist.

Hinsichtlich eines bauraumsparenden und einfachen Aufbaus ergeben sich besondere Vorteile, wenn gemäß einer bevorzugten Ausführungsform der Erfindung der deichselfußnahe Teil zwei seitlich beabstandete Flanschplatten aufweist, mittels denen der deichselfußnahe Teil an dem Deichselfuß verschwenkbar gelagert ist und in denen der Lagerbock sowie der deichselkopfnahe Teil verschwenkbar gelagert ist. Sofern die seitlich beabstandeten Flanschplatten durch Querverstrebungen miteinander verbunden sind, kann eine kastenförmige und stabile Struktur des deichselfußnahen Teils der Deichsel erzielt werden.

Gemäß einer vorteilhaften Ausführungsform der Erfindung ist der Lagerbock als Lagergabel ausgebildet, zwischen der der deichselkopfnahe Teil angeordnet ist, wobei die Anschläge von Querverstrebungen des Lagerbocks gebildet sind. Hierdurch kann ein einfacher und bauraumsparender Aufbau der Deichsel im Bereich des Schwenkgelenks zwischen dem deichselfußnahen Teil und dem deichselkopfnahen Teil der Deichsel erzielt werden.

Bevorzugt ist an dem Lagerbock eine Sensoreinrichtung, insbesondere ein Tastschalter, zur Erfassung der angehobenen Stellung und/oder der abgesenkten Stellung des Deichselkopfes angeordnet. Hierdurch kann auf einfache Weise die waagerechte, abgesenkte Position des Deichselkopfes und/oder die senkrechte, angehobene Position des Deichselkopfes erfasst werden, um entsprechende Bremsbereiche bei senkrechter und/oder waagerechter Deichselkopfstellung zu ermitteln, in denen eine automatische Aktivierung einer Bremseinrichtung, beispielsweise einer Feststellbremse, oder eine Reduzierung der Fahrgeschwindigkeit bzw. der Beschleunigung des Fahrantriebs des Flurförderzeugs erfolgt.

Sofern gemäß einer Weiterbildung der Erfindung an dem Deichselfuß eine Sensoreinrichtung, insbesondere ein Tastschalter, zur Erfassung der Stellung des deichselfußnahen Bereichs in der Stellung für die kurze Deichsel und/oder in der Stellung für die lange Deichsel angeordnet ist, kann auf einfache Weise die Deichselstellung mit langer und kurzer Stellung ermittelt werden. Bevorzugt kann hierbei der Höchstwert der Fahrgeschwindigkeit an die Stellung der Deichsel angepasst werden. Mit einer derartigen Sensoreinrichtung, die mit einer Fahrsteuerung des Flurförderzeugs in Wirkverbindung steht, kann auf einfache Weise die maximal zulässige Fahrgeschwindigkeit in Abhängigkeit von der Stellung der Deichsel begrenzt werden. Somit ist es auf einfache Weise möglich, bei kurzer Deichsel im Mitgängerbetrieb eine verringerte Höchstgeschwindigkeit von beispielsweise 4 km/h zuzulassen und im Mitgängerbetrieb bei ausgeklappter, langer Deichsel die mögliche maximale Fahrgeschwindigkeit auf beispielsweise 6 km/h anzuheben. Hierdurch wird die Betriebssicherheit des Flurförderzeugs im Mitgängerbetrieb erhöht und eine hohe Umschlagleistung des Flurförderzeugs ermöglicht.

Sofern das Flurförderzeug für den Mitgängerbetrieb und den Mitfahrererbetrieb ausgelegt ist und ein Fahrerplatzmodul mit einer klappbaren Fahrerstandplattform und gegebenenfalls klappbaren Seitenbügeln aufweist, kann durch eine die Stellung der Fahrerstandplattform erfassende Sensoreinrichtung und/oder eine die Stellung der Seitenbügel erfassende Sensoreinrichtung weiterhin auf einfache Weise ermöglicht werden, dass im Mitfahrerbetrieb unterschiedliche Höchstwerte der Fahrgeschwindigkeit zugelassen werden können. Bei kurzer Deichsel, ausgeklappter Fahrerstandplattform und eingeklappten Seitenbügeln im Mitfahrerbetrieb kann die maximale Fahrgeschwindigkeit des Lagertechnikstaplers auf einen Höchstwert von beispielsweise 6 km/h begrenzt werden. Im Mitfahrerbetrieb bei kurzer Deichsel, ausgeklappter Fahrerstandplattform und ausgeklappten Seitenbügeln kann die maximale Fahrgeschwindigkeit des Lagertechnikstaplers auf einen erhöhten Höchstwert begrenzt werden, beispielsweise auf eine Fahrgeschwindigkeit im Bereich von 8 bis 12 km/h. Hierdurch wird die Betriebssicherheit des Flurförderzeugs im Mitgängerbetrieb erhöht und ein hohe Umschlagleistung ermöglicht.

Die Erfindung betrifft weiterhin ein deichselgeführtes Flurförderzeug, insbesondere Hubwagen, das zum wahlweisen Betrieb im Mitgängerbetrieb und Mitfahrerbetrieb ausgebildet ist und mit einer klappbaren Fahrerstandplattform sowie einer erfindungsgemäßen Deichsel versehen ist.

Weitere Vorteile und Einzelheiten der Erfindung werden anhand der in den schematischen Figuren dargestellten Ausführungsbeispiele näher erläutert. Hierbei zeigt
- Figur 1: ein erfindungsgemäßen Flurförderzeug in einer perspektivischen Darstellung,
- Figur 2: eine erfindungsgemäße Deichsel in einer Seitenansicht in der Stellung kurze Deichsel,
- Figur 3: eine erfindungsgemäße Deichsel in einer Seitenansicht in der Stellung lange Deichsel,
- Figur 4: eine perspektivische Ansicht der Deichsel in der Stellung kurze Deichsel und abgesenkter Stellung des Deichselkopfes,
- Figur 5: eine perspektivische Ansicht der Deichsel in der Stellung kurze Deichsel und angehobener Stellung des Deichselkopfes,
- Figur 6: einen Ausschnitt der Figur 5 in einer vergrößerten Darstellung,
- Figur 7: eine Seitenansicht der Deichsel in der Stellung kurze Deichsel und abgesenkter Stellung des Deichselkopfes,
- Figur 8: eine Seitenansicht der Deichsel in der Stellung kurze Deichsel und angehobener Stellung des Deichselkopfes,
- Figur 9: die Deichsel gemäß der Figur 8 bei betätigter Arretierungsvorrichtung,
- Figur 10: eine perspektivische Ansicht der Deichsel in der Stellung lange Deichsel und abgesenkter Stellung des Deichselkopfes,
- Figur 11: die Deichsel in der Stellung gemäß der Figur 10 in einer vergrößerten Darstellung,
- Figur 12: eine perspektivische Ansicht der Deichsel in der Stellung lange Deichsel und angehobener Stellung des Deichselkopfes,
- Figur 13: die Deichsel der Figur 12 in einer anderen Ansicht und
- Figur 14: die Deichsel der Figuren 12 und 13 in einer weiteren Ansicht.

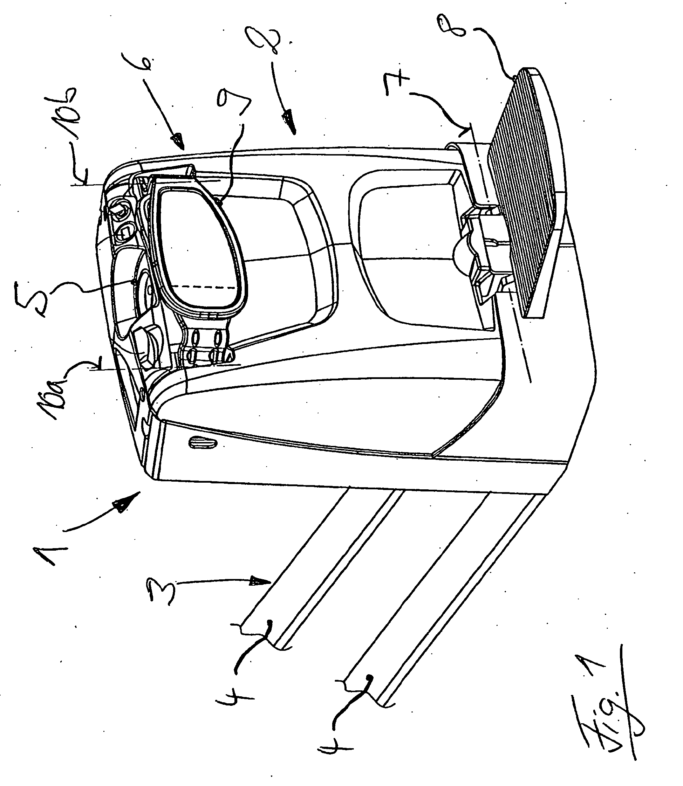

In der Figur 1 ist ein erfindungsgemäßes deichselgeführtes, als Lagertechnikstapler ausgebildetes Flurförderzeug 1 dargestellt, das beispielsweise als Hubwagen, insbesondere Niederhubwagen, ausgebildet ist. Das Flurförderzeug 1 weist einen Antriebsteil 2 und einen relativ zu dem Antriebsteil 2 anhebbaren und absenkbaren Lastteil 3 auf. Der Lastteil 3 umfasst eine von beispielsweise zwei seitlich beabstandeten Lastarmen 4 gebildete Lastgabel.

Mittels an den Spitzen der Lastarme 4 angeordneter und nicht mehr dargestellter Lastrollen ist der Lastteil 3 auf einer Fahrbahn abgestützt.

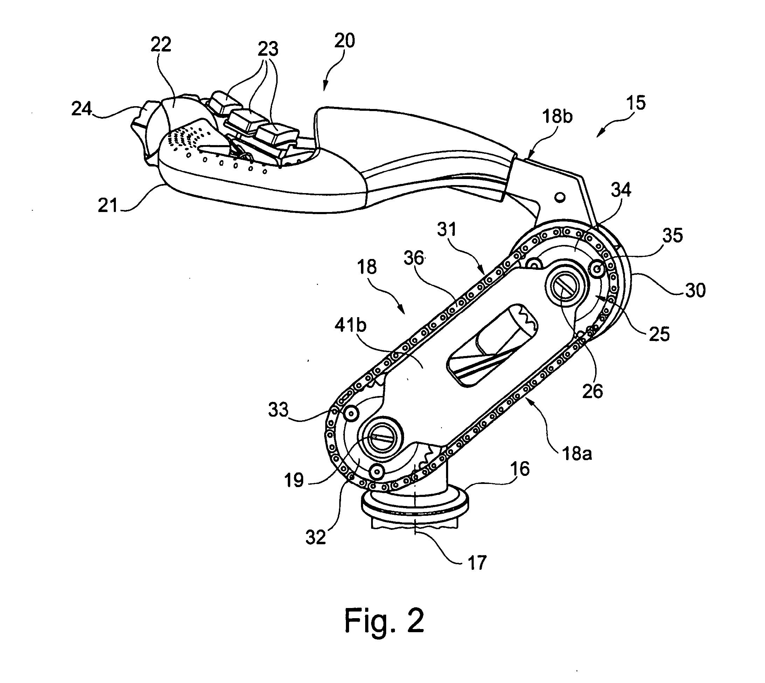

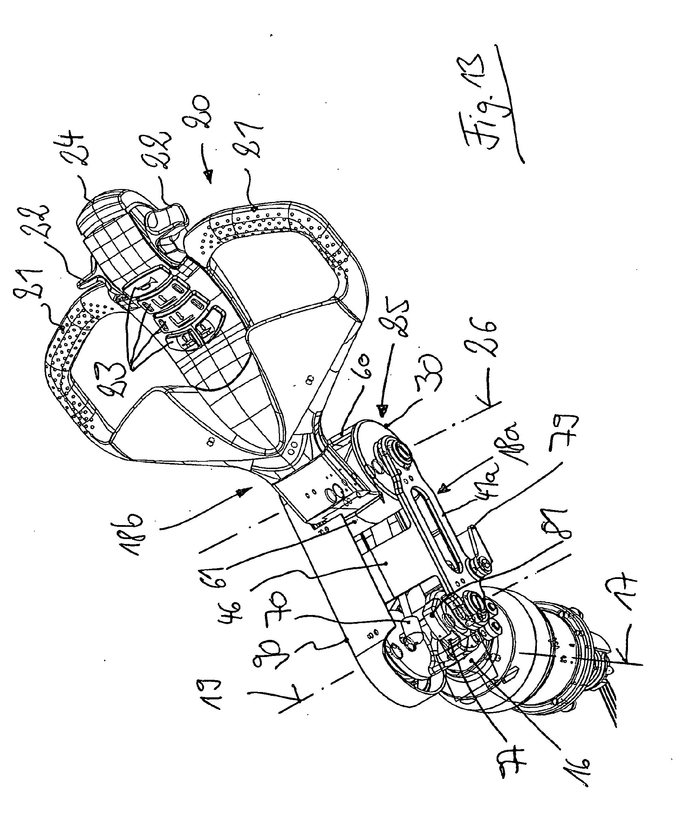

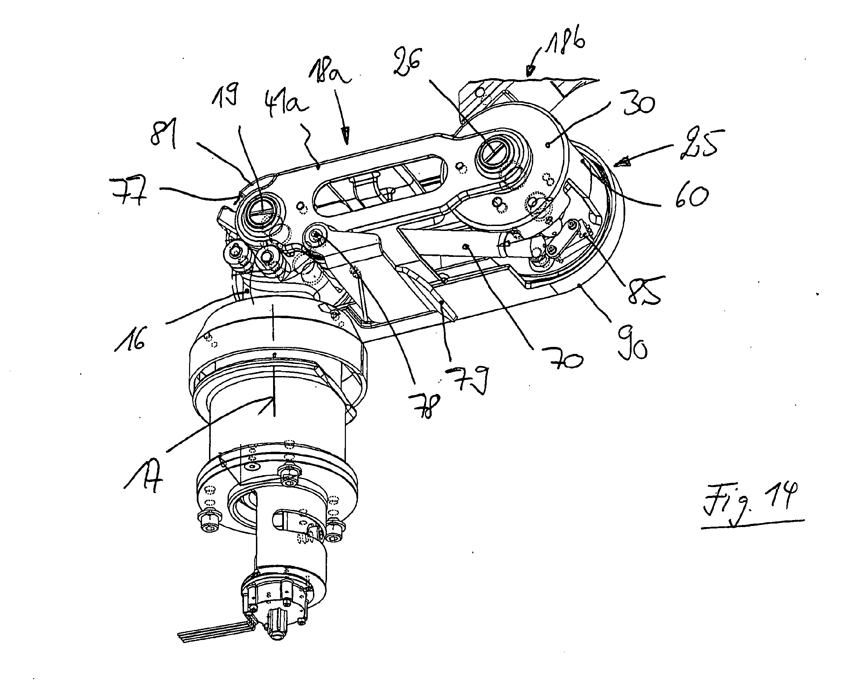

In dem Antriebsteil 2 ist eine nicht mehr dargestellte Fahrantriebseinheit, die ein Antriebsrad und einen das Antriebsrad antreibenden elektrischen Fahrantriebsmotor umfasst, um eine vertikale Schwenkachse lenkbar angeordnet ist. Das Lenken und die Bedienung des Flurförderzeugs 1 durch eine Bedienperson erfolgt mittels einer in der Figur 1 nicht näher dargestellten Deichsel, die an der Oberseite des Antriebsteils 2 bevorzugt in dessen mittleren Bereich angeordnet ist. In der Figur 1 ist eine Ausnehmung 5 dargestellt, in der die in den Figuren 2 bis 14 dargestellte Deichsel angeordnet ist. Das Lenken des Antriebsrades kann hierbei durch eine mechanische Verbindung der Deichsel mit dem Antriebsrad erfolgen. Zudem kann für das Antriebsrad ein elektrischer Lenkantrieb vorgesehen sein, bei dem ein Sensor an der Deichsel den Lenkwinkel erfasst und ein Lenkmotor in Abhängigkeit von dem Lenkwinkel betätigt wird.

Das erfindungsgemäße Flurförderzeug 1 ist zum wahlweisen Betrieb im Mitgängerbetrieb und im Mitfahrerbetrieb vorgesehen. Hierzu ist an dem Antriebsteil 2 gegenüberliegend zu dem Lastteil 3 ein Fahrerplatzmodul 6 angeordnet, das eine um eine horizontale Schwenkachse 7 klappbar am Antriebsteil 2 angeordnete Fahrerstandplattform 8 und zwei der Fahrerstandplattform 8 zugeordnete, schwenkbare Seitenbügel 9 umfasst, die um jeweils eine vertikale Schwenkachse 10a, 10b an den seitlichen Bereichen des Antriebsteil 2 schwenkbar angeordnet sind.

In der Vorderseite des Antriebsteils 2 sind für die eingeklappte Fahrerstandplattform 8 und die eingeklappten Seitenbügel 9 jeweils eine Ausbuchtung vorhanden, so dass im Mitgängerbetrieb bei eingeklappter Fahrerstandplattform 8 und eingeklappten Seitenbügeln 9 die Fahrerstandplattform 8 und die Seitenbügel 9 innerhalb der Kontur des Antriebsteils 2 angeordnet sind.

In der Figur 1 ist das Flurförderzeug 1 im Mitfahrerbetrieb mit ausgeklappter Fahrerstandplattform 8 und eingeklappten Seitenbügeln 9 dargestellt.

Durch Verschwenken der Seitenbügel 9 um die entsprechende Schwenkachse 10a, 10b nach Außen kann das Flurförderzeug 1 in eine Stellung für den Mitfahrerbetrieb gebracht werden, in der die in der ausgeklappten Stellung befindlichen beiden Seitenbügel 9a, 9b einer auf der Fahrerstandplattform 8 stehenden Bedienperson zusätzlich seitlichen Halt bieten.

Bei eingeklappten Seitenbügeln 9 und durch Hochschwenken der Fahrerstandplattform 8 um die Schwenkachse 7 in eine eingeklappte Stellung kann das Flurförderzeug 1 im Mitgängerbetrieb betrieben werden.

In den Figuren 2 bis 14 ist eine erfindungsgemäße Deichsel 15 dargestellt, die in der Ausnehmung 5 an der Oberseite des Antriebsteils 2 an dem antriebsteilseitigen Ende des Flurförderzeugs 1 angeordnet ist.

Die Deichsel 15 weist einen Deichselfuß 16 auf, der an dem Antriebsteil 2 um eine vertikale Schwenkachse 17 schwenkbar angeordnet ist. An dem Deichselfuß 16 ist ein Deichselschaft 18 der Deichsel 15 mit einem deichselfußnahen Bereich um eine im Wesentlichen horizontale Schwenkachse 19 schwenkbar gelagert. An einem deichselkopfseitigen Bereich des Deichselschaftes 18 ist ein Deichselkopf 20 angeordnet, der mit Handgriffen 21 und Bedienelementen versehen ist, beispielsweise als Flügelschaltern ausgebildeten Fahrschaltern 22 im Bereich der Handgriffe 21 zur Steuerung der Fahrtrichtung und der Fahrgeschwindigkeit des Fahrantriebs, als Tastschalter an der Oberseite des Deichselkopfes 20 angeordneten Schaltern 23 zur Steuerung des Hubantriebs zum Heben/Senken des Lastteils 3 und zur Steuerung einer von einer Hupe gebildete Signaleinrichtung sowie einem als Druckschalter ausgebildeter Sicherheitsschalter 24 an der der Bedienperson zugewandten Stirnseite des Deichselkopfes 20.

Die erfindungsgemäße Deichsel 15 ist zur Längenverstellung als klappbare Deichsel mit einem zweiteiligen Deichselschaft 18 ausgebildet, wobei der Deichselschaft 18 einen deichselfußnahen Teil 18a und einen deichselkopfnahen Teil 18b umfasst. Mit dem deichselfußnahen Teil 18a ist der Deichselschaft 18 an dem Deichselfuß 16 um die horizontale Schwenkachse 19 schwenkbar gelagert. Der deichselkopfnahe Teil 18b ist mit dem Deichselkopf 20 versehen. Zwischen dem deichselfußnahen Teil 18a und dem deichselkopfnahen Teil 18b ist ein die Funktion eines Kniegelenks des Deichselschaftes 18 aufweisendes Schwenkgelenk 25 mit einer im Wesentlichen horizontalen Schwenkachse 26 ausgebildet, mit dem der deichselkopfnahe Teil 18b an dem deichselfußnahen Teil 18a verschwenkbar gelagert ist.

In der Figur 2 befindet sich die Deichsel 15 in einer eingeklappten und abgewinkelten Stellung und somit der Stellung kurze Deichsel für den Mitfahrerbetrieb des Flurförderzeugs 1 mit einer auf der ausgeklappten Fahrerstandplattform 8 stehenden Bedienperson bzw. für den Mitgängerbetrieb bei engen Platzverhältnissen. Der deichselfußnahe Teil 18a des Deichselschaftes 18 ist hierbei um die Schwenkachse 19 in Richtung zu dem Lastteil 3 abgewinkelt und befindet sich oberhalb des Antriebsteils 2 in einer von der Bedienperson weggeneigten Stellung. Der deichselkopfnahe Teil 18b des Deichselschaftes 18 ist um die Schwenkachse 26 gegenüber dem deichselfußnahen Teil 18a abgewinkelt und erstreckt sich in Richtung des antriebsteilseitigen Endes des Flurförderzeugs 1 in Richtung zu der Bedienperson. In der kurzen Stellung der Deichsel 15 sind somit der deichselkopfnahe Teil 18b angewinkelt zu dem deichselfußnahen Teil 18a angeordnet.

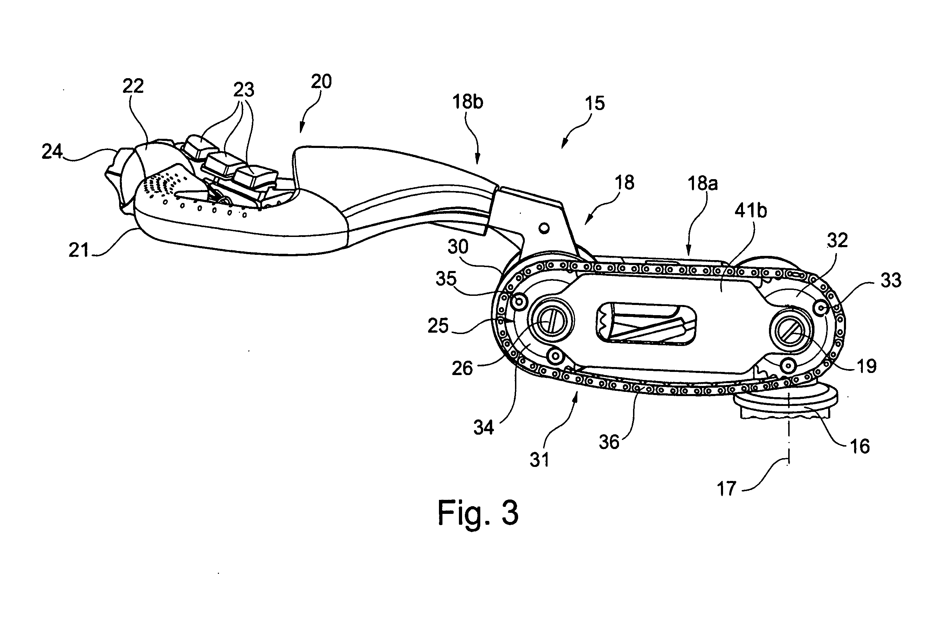

Die Figur 3 zeigt die erfindungsgemäße Deichsel 15 in einer ausgeklappten und gestreckten Stellung und somit der Stellung lange Deichsel für den Mitgängerbetrieb des Flurförderzeugs 1 bei hochgeklappter Fahrerstandplattform 8. Der deichselfußnahe Teil 18a ist um die Schwenkachse 19 in Richtung des antriebsteilseitigen Endes des Flurförderzeugs 1 verschwenkt und erstreckt sich in Richtung zu der Bedienperson. In der langen Stellung der Deichsel 15 befindet sich somit der deichselkopfnahe Teil 18b in Verlängerung des deichselfußnahen Teils 18a und erstreckt sich zur Bedienperson.

Bei der erfindungsgemäßen Deichsel 15 ist das Schwenkgelenk 25 zwischen dem deichselfußnahen Teil 18a und dem deichselkopfnahen Teil 18b von einem um die Schwenkachse 26 verschwenkbaren Lagerbock 30 gebildet, der über eine Parallelführungseinrichtung 31 mit dem Deichselfuß 16 gekoppelt ist. Der deichselkopfnahe Teil 18b mit dem Deichselkopf 20 ist an dem Lagerbock 30 um die Schwenkachse 26 verschwenkbar gelagert.

In den Figuren 2 und 3 ist der Aufbau der Parallelführungseinrichtung 31 näher dargestellt. Die Parallelführungseinrichtung 31 ist im dargestellten Ausführungsbeispiel von einem bevorzugt formschlüssigen Zugmitteltrieb gebildet, der als Kettentrieb ° ausgestaltet ist. Der Kettentrieb umfasst ein um die Schwenkachse 19 drehfest an dem Deichselfuß 16 angeordnetes Kettenrad 32. Zur Befestigung des Kettenrades 32 an dem Deichselfuß 16 sind beispielsweise Schraubverbindungen 33 als Befestigungsmittel vorgesehen. Ein weiteres Kettenrad 34 ist an dem um die Schwenkachse 26 verschwenkbaren Lagerbock 30 drehfest befestigt. Hierzu sind beispielsweise Schraubverbindungen 35 als Befestigungsmittel vorgesehen. Ein als Kette 36 ausgebildetes Zugmittel ist auf die beiden Kettenräder 32, 34 aufgelegt und umschlingt die beiden Kettenräder 32, 34.

Mit der Parallelführungseinrichtung 31 ist hierbei beim Verstellen der Deichsel 15 zwischen der kurzen Stellung und der langen Stellung und somit beim Ein- bzw. Ausklappen des deichselfußnahen Teils 18a um die Schwenkachse 19 zur Längenverstellung der Deichsel 15 ein derartiges Verschwenken des an dem deichselfußnahen Teils 18a um die Schwenkachse 26 schwenkbar gelagerten Lagerbocks 30 erzielbar, dass eine Parallelführung des Lagerbocks 30 und somit des in dem Lagerbock 30 angeordneten deichselkopfnahen Teils 18b mit dem Deichselkopf 20 erzielt wird. Der Deichselkopf 20 durchläuft hierdurch eine kurze und im Wesentlichen lineare Bewegungsbahn und die Bedienperson, die mit einer Hand oder beiden Händen den Deichselkopf 20 an den Griffabschnitten 21 hält, kann die Deichsel 15 von der kurzen Stellung in die lange Stellung und entsprechend von der langen Stellung in die kurze Stellung bei unveränderter Griffposition verstellen, ohne die Handposition an den Griffabschnitten 21 des Deichselkopfes 20 verändern zu müssen.

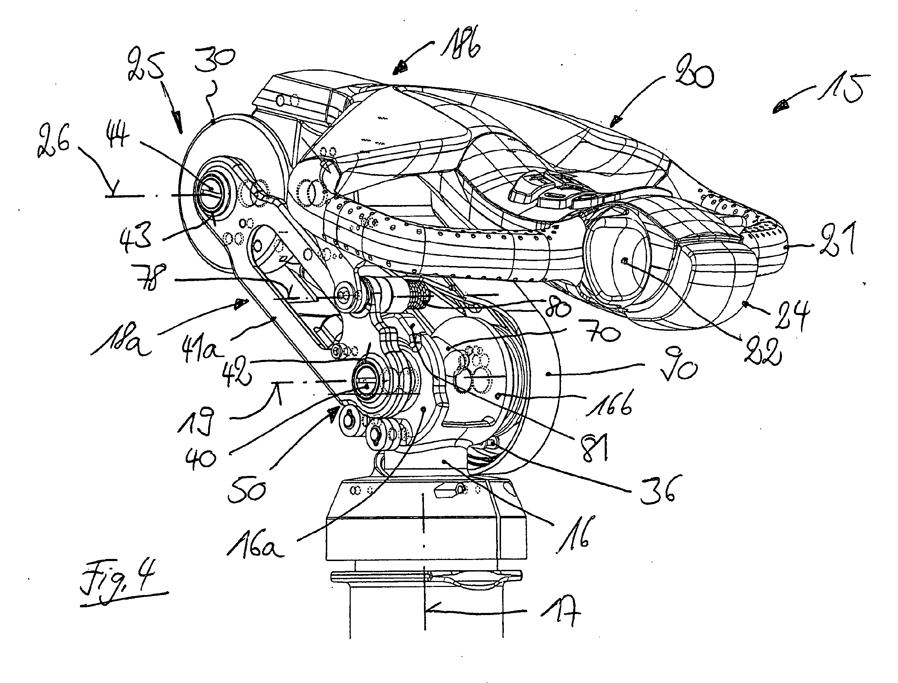

Der Deichselfuß 16 ist - wie insbesondere den Figuren 4 bis 6 und 10 bis 13 näher zu entnehmen ist - als Lagergabel ausgebildet und weist zwei seitliche, senkrechte Flanschplatten 16a, 16b auf, die an den Außenseiten mit jeweils einem Lagerzapfen 40 versehen sind, die die Schwenkachse 19 bilden.

Der deichselfußnahe Teil 18a des Deichselschaftes 18 weist zwei seitlich beabstandete Flanschplatten 41 a, 41 b auf, die an einem unteren Endbereich mit jeweils einer Lagerbohrungen 42 versehen sind, mit der die Flanschplatte 41 a, 41 b an dem entsprechenden Lagerzapfen 40 des Deichselfußes 16 verschwenkbar gelagert ist.

Die Flanschplatten 41 a, 41 b weisen an dem gegenüberliegenden oberen Ende jeweils eine Lagerbohrung 43 auf, in der ein Lagerbolzen 44 verschwenkbar gelagert ist, der die Schwenkachse 26 des Schwenkgelenks 25 bildet. Der Lagerbolzen 44 ist bevorzugt mit dem deichselkopfnahen Teil 18b drehfest verbunden. Auf dem Lagerbolzen 44 ist zudem der zwischen den beiden Flanschplatten 41 a, 41 b angeordnete Lagerbock 30 um die Schwenkachse 26 verschwenkbar angeordnet.

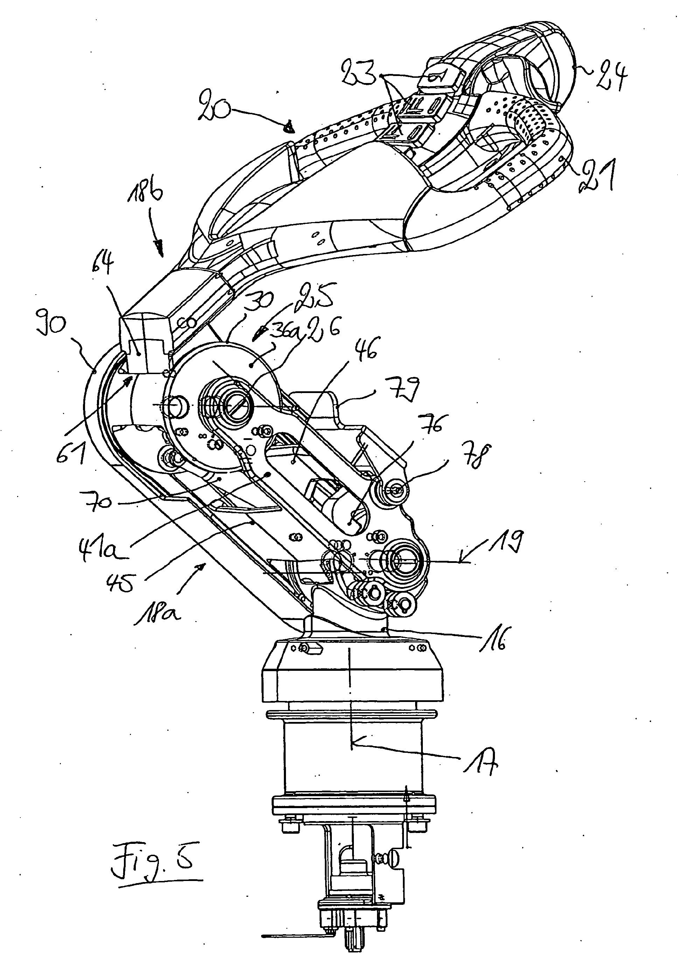

Der deichselfußnahe Teil 18a weist - wie insbesondere in den Figuren 5, 6 und 10 näher ersichtlich ist - weiterhin zwischen dem Lagerbock 30 und dem Deichselfuß 16 angeordnete Querverstrebungen 45, 46 zwischen den seitlichen Flanschplatten 41 a, 41 b auf, die zur Stabilitätserhöhung eine kastenförmige und stabile Struktur des deichselfußnahen Teils 18a ergeben. Die Querverstrebung 45 ist als untere Querverbindung ausgebildet und im dargestellten Ausführungsbeispiel von einem die beiden Flanschplatten 41 a, 41 b verbindenden Verbindungssteg gebildet, der im mittleren Bereich zwischen den Schwenkachsen 19, 26 die beiden Flanschplatten 41 a, 41 b verbindet. Entsprechend ist die Querverstrebung 46 als obere Querverbindung ausgebildet und im dargestellten Ausführungsbeispiel von einem die beiden Flanschplatten 41 a, 41 b verbindenden Verbindungssteg gebildet, der im mittleren Bereich zwischen den Schwenkachsen 19, 26 die beiden Flanschplatten 41 a, 41 b verbindet.

Der deichselfußnahe Teil 18a ist an dem Deichselfuß 16 zwischen einem Anschlag 50 für die eingeklappte und kurze Stellung der Deichsel 15 sowie einem Anschlag 51 für die ausgeklappte und lange Stellung der Deichsel 15 um die Schwenkachse 19 verschwenkbar angeordnet. Der Aufbau der Anschläge 50, 51 wird anhand der Figuren 4, 6 und 11 näher beschrieben. An dem unteren Bereich der Flanschplatte 41 a sind hierzu Anschlagflächen 52, 53 ausgebildet, die mit entsprechenden Anschlagzapfen 54, 55 zusammenwirken, die an dem Deichselfuß 16 im Bereich der Flanschplatte 16a angeordnet sind.

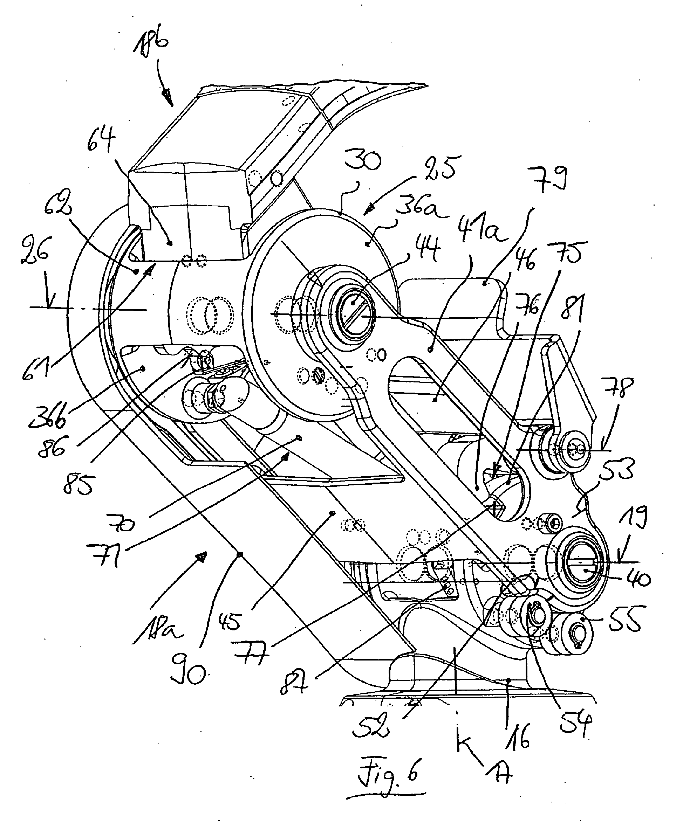

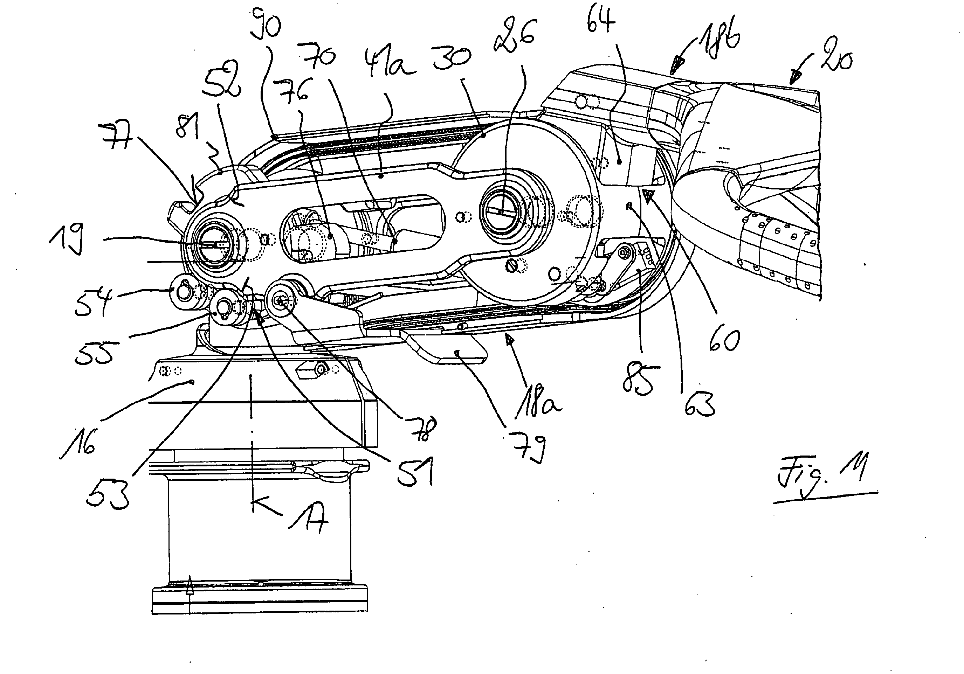

In der eingeklappten Stellung des deichselfußnahen Teils 18a liegt hierbei die Flanschplatte 41a mit der Anschlagfläche 52 an dem Anschlagzapfen 54 an, wodurch der Anschlag 50 für die eingeklappte und kurze Deichsel 15 gebildet ist, wie in den Figuren 4 und 6 dargestellt ist. In der ausgeklappten Stellung des deichselfußnahen Teils 18a liegt die Flanschplatte 41 a mit der Anschlagfläche 53 an dem Anschlagzapfen 55 an, wodurch der Anschlag 51 für die ausgeklappte und lange Stellung der Deichsel 15 gebildet ist, wie in der Figur 11 dargestellt ist.

Der Aufbau des Lagerbocks 30 wird anhand der Figuren 4 bis 6 und 10 bis 14 näher beschrieben. Der Lagerbock 30 ist als Lagergabel ausgebildet, die zwei seitlich beabstandete, scheibenförmige Abschnitte 36a, 36b umfasst, zwischen den ein Freiraum ausgebildet ist, in dem der deichselkopfnahe Teil 18b um die Schwenkachse 26 verschwenkbar angeordnet ist. Der deichselkopfnahe Teil 18b ist hierbei in dem von den flanschförmigen Abschnitten 36a, 36b gebildeten Freiraum zwischen einem Anschlag 60 für die abgesenkte Stellung des Deichselkopfes 20 und einem Anschlag 61 für die angehobene Stellung des Deichselkopfes 20 um die horizontale Schwenkachse 26 verschwenkbar. Der Anschlag 61 für den angehobenen Deichselkopf 20 ist hierbei von einer Querverstrebung 62 des Lagerbocks 30 gebildet, an die der deichselkopfnahe Teil 18b mit einem abgekröpften Lagerabschnitt 64 anschlagen kann, wie beispielsweise in der Figur 6 gezeigt ist. In dem Lagerabschnitt 64 ist hierbei der Lagerbolzen 44 angeordnet. Die Querverstrebung 62 ist von einem die beiden Abschnitte 36a, 36b verbindenden Verbindungssteg gebildet, der mit den beiden Abschnitte 36a, 36b verbunden ist. Entsprechend ist der Anschlag 60 für den abgesenkten Deichselkopf 20 von einer Querverstrebung 63 des Lagerbocks 30 gebildet, an die der deichselkopfnahe Teil 18b mit dem abgekröpften Lagerabschnitt 64 anschlagen kann. Die Querverstrebung 63 ist entsprechend von einem an dem scheibenförmigen Abschnitt 36a, 36b angeformten Verbindungssteg gebildet, wie beispielsweise aus der Figur 11 ersichtlich ist.

Innerhalb des kastenförmigen deichselfußnahen Teils 18a ist eine Gasdruckfeder 70 angeordnet, die eine kraftschlüssige Arretierungseinrichtung 71 zur Arretierung der Deichsel 15 in der kurzen Stellung sowie in der langen Stellung ermöglicht. Die Anlenkung der Gasfeder 70 an dem Deichselfuß 16 sowie dem Lagerbock 30 wird anhand der Figuren 4 und 6 näher erläutert. Die Gasdruckfeder 70 ist mit dem unteren Ende an dem Deichselfuß 16 befestigt, beispielsweise an der Innenseite der Flanschplatte 16b, wie in der Figur 4 dargestellt ist. Die Befestigung der Gasfeder 70 an dem Deichselfuß 16 ist hierbei von der Schwenkachse 19 in vertikaler Richtung nach oben beabstandet. Das obere Ende der Gasdruckfeder 70 ist an dem Lagerbock 30 befestigt, beispielsweise an der Innenseite des scheibenförmigen Abschnitts 36b. Die Befestigung der Gasdruckfeder 70 an dem Lagerbock 30 ist hierbei von der Schwenkachse 26 in vertikaler Richtung nach unten beabstandet. Durch diese Anlenkung der Gasdruckfeder 70 an dem Lagerbock 30 sowie an dem Deichselfuß 16 wird eine Totpunktverriegelung des deichselfußnahen Teils 18a sowohl in der eingeklappten Stellung als auch in der ausgeklappten Stellung der Deichsel 15 erzielt, bei der der deichselfußnahe Teil 18a durch die Kraft der Gasdruckfeder 70 an dem Anschlag 50 bzw. dem Anschlag 51 gehalten wird. Zum Verstellen der Deichsel 15 von der kurzen Stellung in die lange Stellung bzw. von der langen Stellung in die kurze Stellung muss hierbei von der Bedienperson zu Bewegungsbeginn die Kraft der Gasdruckfeder 70 überwunden werden und die Gasdruckfeder 70 komprimiert werden, bis bei senkrecht stehendem deichselfußnahen Teil 18a und somit senkrecht stehender Gasdruckfeder 70 ein Totpunkt durchlaufen wird. Bei der weiteren Schwenkbewegung des deichselfußnahen Teils 18a wird die Gasdruckfeder 70 entspannt und unterstützt die Schwenkbewegung des deichselfußnahen Teils 18a bis zu dem Bewegungsende, wodurch eine günstige Ergonomie für die Verstellung der Deichsel 15 und eine Unterstützung der Bewegung der Deichsel 15 in der zweiten Bewegungshälfte durch die Kraft der Gasdruckfeder 70 erzielt wird.

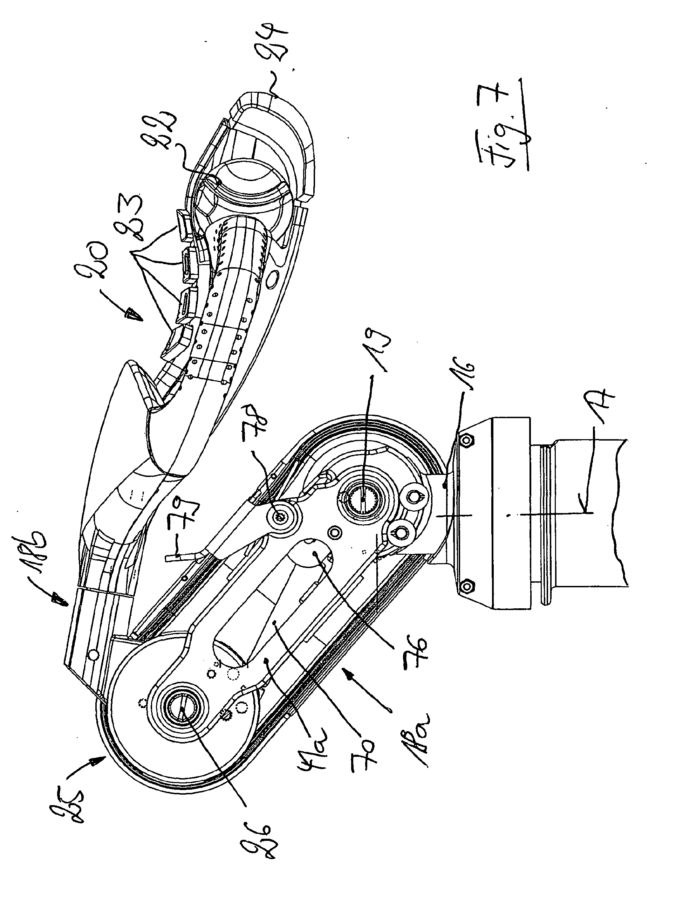

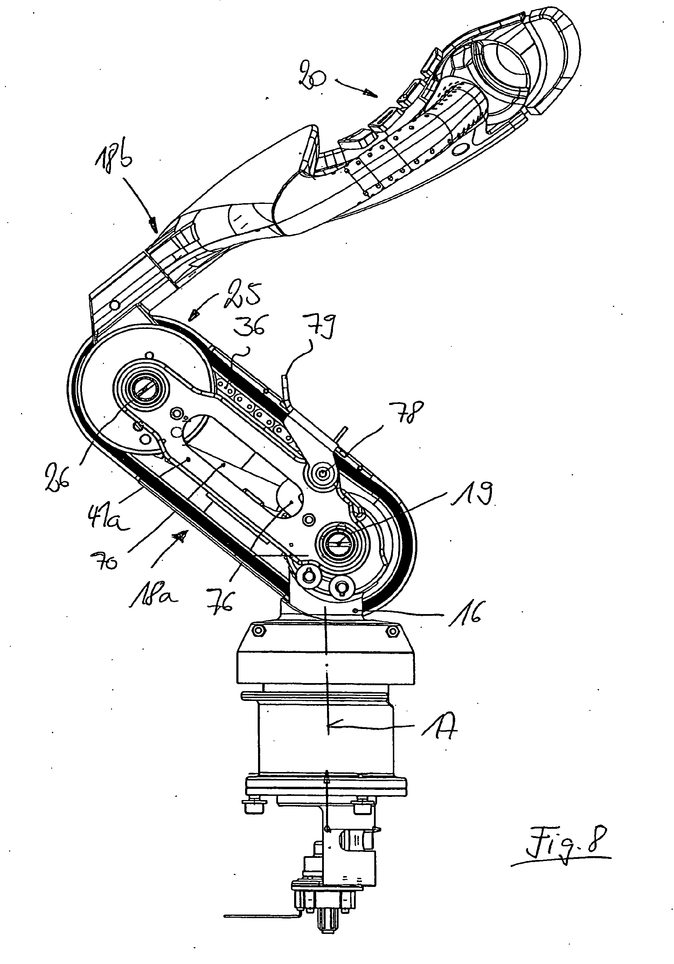

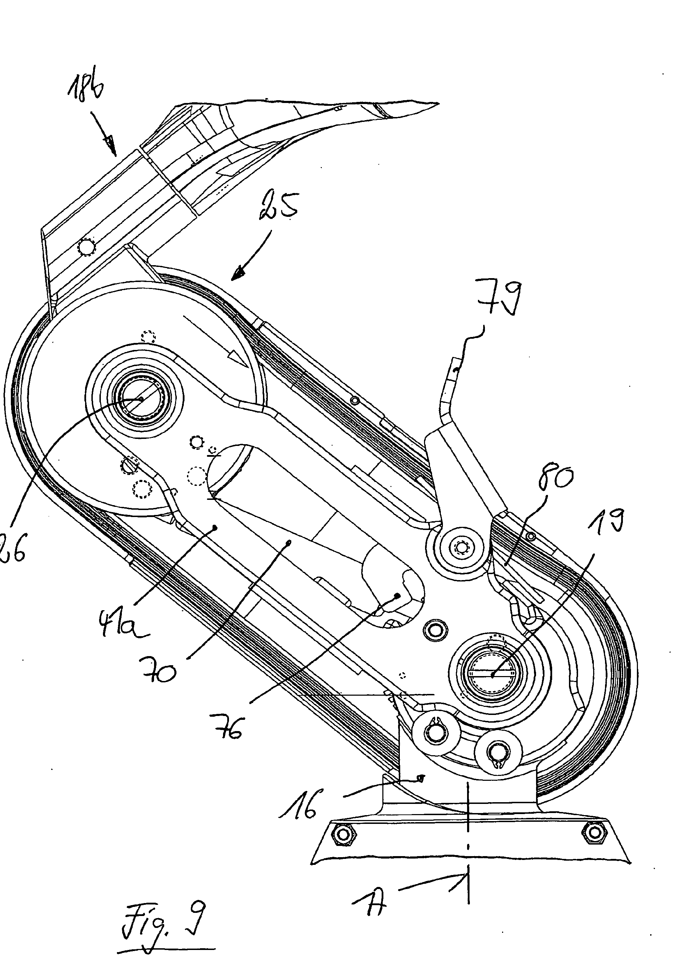

Zur Arretierung der Deichsel 15 in der eingeklappten und somit kurzen Stellung ist zusätzlich eine formschlüssige Arretierungseinrichtung 75 vorgesehen, die anhand der Figuren 4 bis 11 näher beschrieben wird. Die Arretierungsvorrichtung 75 ist von einem an dem deichselfußnahen Teil 18a verschwenkbar angeordneten Rasthaken 76 gebildet, der mit einer Rastausnehmung 77 in dem Deichselfuß 16 zusammenwirkt. Die Rastausnehmung 77 ist hierbei an der Flanschplatte 16a des Deichselfußes 16 ausgebildet. Der Rasthaken 76 ist um eine parallel zu den Schwenkachsen 19 und 26 angeordnete Schwenkachse 78 verschwenkbar angeordnet und mittels eines Handhebels 79 betätigbar, der an den beiden Flanschplatten 41 a, 41b um die Schwenkachse 78 verschwenkbar gelagert ist. Der Rasthaken 76 ist mittels einer Feder 80 in eine Verriegelungsstellung beaufschlagt, in der der Rasthaken 76 in die Rastausnehmung 77 einhakt. In den Figuren 7 und 8 ist die Verriegelungsstellung für die kurze Stellung der Deichsel 15 dargestellt. Durch Betätigen des Handhebels 79 und somit Verschwenken des Handhebels 79 um die Schwenkachse 78 kann der Rasthaken 76 - wie in der Figur 9 dargestellt ist - betätigt und außer Eingriff mit der Rastausnehmung 77 gebracht werden, um ein Verstellen der Deichsel 15 von der kurzen Stellung in die lange Stellung zu erzielen. An der Flanschplatte 16a des Deichselfußes 16 ist angrenzend an die Rastausnehmung 77 eine Führungskulisse 81 für den Rasthaken 76 angeformt, die ermöglicht, dass beim Verstellen der Deichsel 15 von der langen Stellung in die kurze Stellung der Rasthaken 76 entgegen der Kraft der Feder 80 verschwenkt wird, um beim Erreichen der eingeklappten Stellung des deichselfußnahen Teils 18a automatisch in die Rastausnehmung 77 einrasten zu können.

Mit dem federbelasteten Rasthaken 76 wird eine hohe Betriebssicherheit bei kurzer Deichsel, insbesondere im Mitfahrerbetrieb, ermöglicht, da sich die auf der ausgeklappten Fahrerstandplattform 8 stehende Bedienperson an der arretierten Deichsel 15 festhalten kann. Zum Verstellen der Deichsel 15 von der kurzen in die lange Stellung ist lediglich ein Handgriff zum Betätigen des Handhebels 79 und zum Lösen des Rasthakens 76 erforderlich, wodurch eine hohe Bedienungsfreundlichkeit und eine schneller Wechsel der Deichsel 15 von der kurzen in die lange Stellung erzielt wird. Beim Verstellen von der langen in die kurze Stellung der Deichsel 15 ist aufgrund der Führungskulisse 81, an der der Rasthaken 76 beim Verschwenken des deichselfußnahen Teils 18a geführt wird, ein selbstständiges und automatisches Einrasten des Rasthakens 76 bei Erreichen der kurzen Stellung erzielbar, wodurch kein zusätzlicher Bedienungsaufwand für die Arretierungseinrichtung 75 beim Verstellen der Deichsel 15 von der langen in die kurze Stellung erforderlich ist, wodurch ein schneller Wechsel mit einer Bedienungsfreundlichkeit erzielt wird.

In der Figur 6 ist eine Sensoreinrichtung 85 dargestellt, mit der die Stellung des deichselkopfnahen Teils 18b bei angehobener, senkrechter Stellung des Deichselkopfes 20 und/oder abgesenkter, waagerechter Stellung des Deichselkopfes 20 erfasst werden kann. Die Sensoreinrichtung 85 ist hierzu an dem Lagerbock 30, beispielsweise im Bereich des scheibenförmigen Abschnitts 36b, angeordnet und von einem Tastschalter gebildet, der von einer an dem deichselkopfnahen Teil 18b an dem Lagerabschnitt 64 angeordneten, nockenförmigen Betätigungsbahn 86 betätigbar ist.

In der Figur 6 ist eine weitere Sensoreinrichtung 87 dargestellt, mit der die Stellung des deichselfußnahen Teils 18a in der Stellung für die kurze Deichsel 15 und/oder in der Stellung für die lange Deichsel 15 erfasst werden kann. Die Sensoreinrichtung kann hierbei an dem Deichselfuß 16, insbesondere der Flanschplatte 16a, angeordnet sein und von einem Tastschalter gebildet werden, der von einer an dem deichselfußnahen Teil 18a angeordneten, nicht näher dargestellten nockenförmigen Betätigungsbahn betätigbar ist.

Sofern die Sensoreinrichtungen 85, 87 mit eine Fahrsteuerung des Flurförderzeugs in Wirkverbindung stehen, kann die Fahrgeschwindigkeit anhand der kurzen Stellung bzw. der langen Stellung der Deichsel 15 auf unterschiedliche Höchstwerte begrenzt werden und es kann anhand der angehobenen bzw. abgesenkten Stellung des Deichselkopfes 20 eine Begrenzung bzw. Reduzierung der Fahrgeschwindigkeit bzw. der Beschleunigung in einem Bremsbereich bei waagerechter und/oder senkrechter Deichselkopfstellung durchgeführt werden.

In den Figuren 4 bis 14 ist weiterhin eine Schutzabdeckung 90 für die Parallelführungseinrichtung 31 dargestellt, die an dem deichselfußnahen Teil 18a angeordnet ist, um den von den Kettenrädern 32, 34 und der Kette 36 gebildeten Zugmitteltrieb abzudecken.

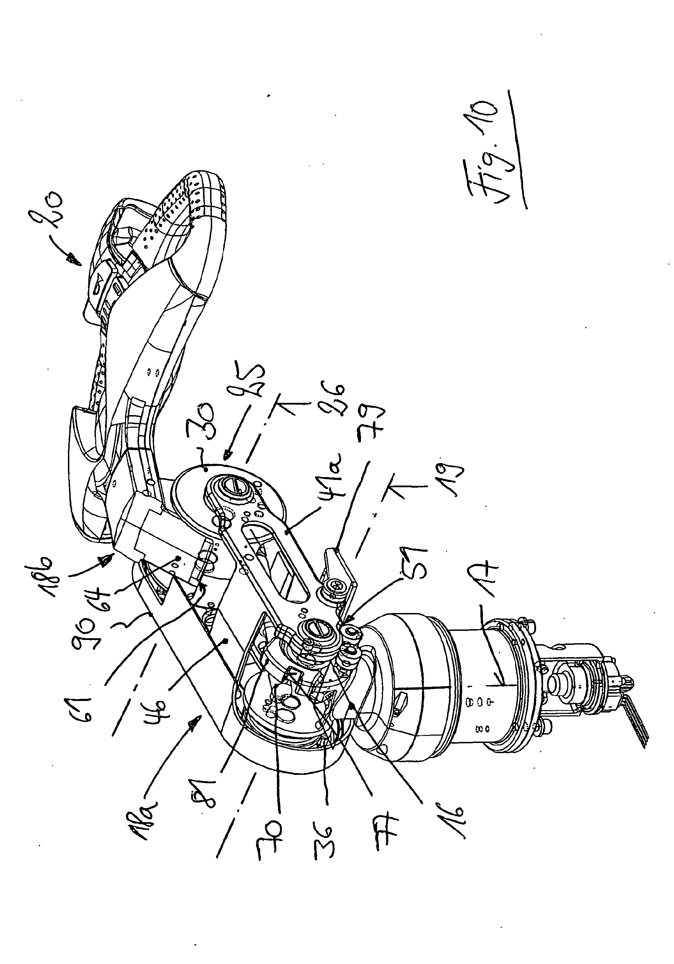

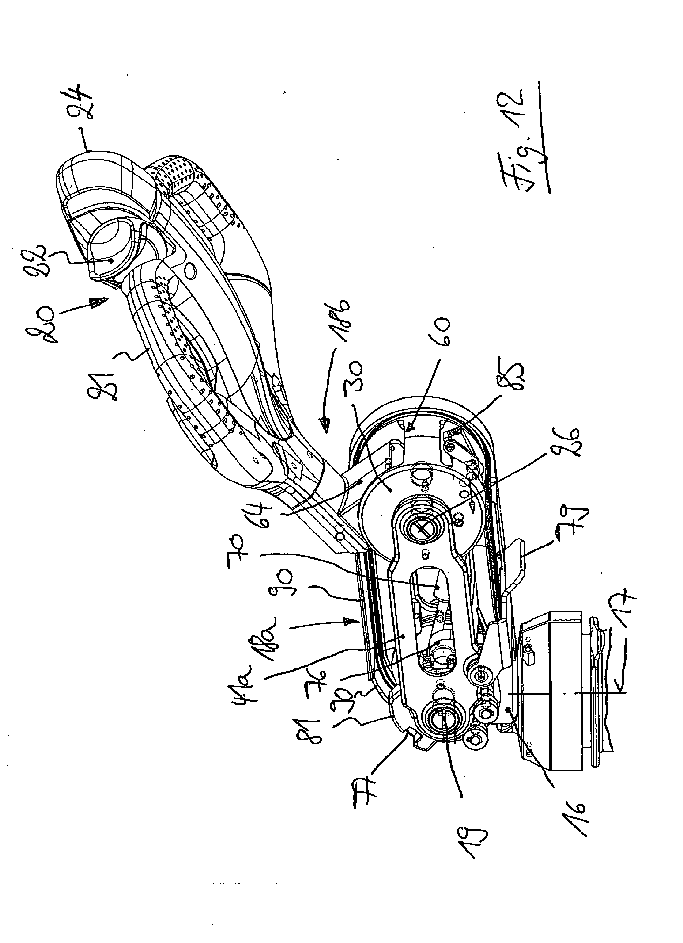

Die erfindungsgemäße Deichsel 15 ermöglicht einen schnellen und bedienungsfreundlichen Wechsel der als Kombi-Deichsel ausgebildeten Deichsel 15 zwischen der langen, gestreckten Stellung und der kurzen, angewinkelten Stellung, wobei insbesondere durch die kurze Bewegungsbahn mit unveränderter Orientierung und ohne Verschwenken des Deichselkopfes 20 eine ergonomische Längenveränderung der Deichsel 15 beim Verschwenken des deichselfußnahen Teils 18a ohne Veränderung der Handposition an den Griffabschnitten 21 des Deichselkopfes 20 ermöglicht wird. Insbesondere aus den Figuren 2 und 3 wird deutlich, dass zur Längenveränderung der Deichsel 15 durch Verschwenken des deichselfußnahen Teils 18a um die Schwenkachse 19 die Deichsel 15 von der kurzen Stellung in die lange Stellung bzw. von der langen Stellung in die kurze Stellung betätigt werden kann, wobei die Orientierung und Ausrichtung des Deichselkopfes 20 gleich bleibt und keine zusätzliche Schwenkbewegung des Deichselkopfes 20 um die Schwenkachse 26 auftritt. Die Figuren 4 bis 9 verdeutlichen weiterhin, dass in der kurze Stellung der Deichsel 15 bei angewinkeltem deichselfußnahen Teil 18a der Deichselkopf 20 in dem Lagerbock 30 um die Schwenkachse 26 zwischen dem Anschlag 60 für die waagerechte Position des Deichselkopfes 20 (Figur 4) und dem Anschlag 61 für die senkrechte Position des Deichselkopfes 20 (Figur 5) betätigt werden kann. Das gleiche Schwenkverhalten des Deichselkopfes 20 ist in der langen Stellung der Deichsel 15 bei ausgestrecktem deichselfußnahen Teil 18a erzielbar. Wie in den Figuren 10 bis 14 verdeutlicht ist, kann ebenfalls in der langen Stellung der Deichsel 15 bei ausgestrecktem deichselfußnahen Teil 18a der Deichselkopf 20 in dem Lagerbock 30 um die Schwenkachse 26 zwischen dem Anschlag 60 für die waagerechte Position des Deichselkopfes 20 (Figuren 10, 11) und dem Anschlag 61 für die senkrechte Position des Deichselkopfes 20 (Figuren 12 bis 14) betätigt werden.

Die Bedienperson kann hierdurch die Deichsel 15 auf einfache, schnelle und ergonomische Weise zwischen der langen Stellung und der kurzen Stellung verstellen, wobei insbesondere im Mitgängerbetrieb des Flurförderzeugs eine hohe Wendigkeit und hohe Umschlagleistung des Flurförderzeugs mit einer schnellen, sicheren und kontrollierten Lasthandhabung erzielt werden kann, da die Deichsel 15 in engen Bereichen auf einfache und schnelle Weise in die kurze Stellung abgewinkelt werden kann und im normalen Betrieb in einfacher und schneller Weise in die lange Stellung ausgestreckt werden kann.

Bevorzugt sind der Abstand der Schwenkachsen 19, 26 an dem deichselfußnahen Teil 18a und die Anschläge 50, 51 des deichselfußnahen Teils 18a derart bemessen und angeordnet, dass sich im Mitgängerbetrieb und Mitfahrerbetrieb eine ergonomisch günstige Position der Bedienperson zum Flurförderzeug ergibt. Bevorzugt entspricht hierbei die vertikale Höhenveränderung der Schwenkachse 26 des Deichselkopfes 20 zwischen der kurzen Stellung und der langen Stellung der Deichsel 15 der Höhe der ausgeklappten Fahrerstandplattform 8 über der Fahrbahnoberfläche.

## Patentansprüche

1. Deichsel (15) eines deichselgeführten Flurförderzeugs (1), insbesondere Hubwagen, die einen Deichselfuß(16), einen Deichselschaft(18) und einen Deichselkopf (20) umfasst, wobei die Deichsel (15) mittels des Deichselfußes(16) an einem Antriebsteil (2) des Flurförderzeugs (1) um eine im Wesentlichen vertikale Schwenkachse (17) schwenkbar gelagert ist, und die Deichsel (15) zur Längenverstellung als klappbare Deichsel ausgebildet ist, wobei der Deichselschaft (18) einen zweiteiligen Aufbau mit einem deichselfußnahen Teil (18a) und einem deichselkopfnahen Teil (18b) aufweist, wobei der deichselfußnahe Teil (18a) an dem Deichselfuß (16) um eine im Wesentlichen horizontale Schwenkachse (19) verschwenkbar gelagert ist und der deichselkopfnahe Teil (18b) über ein Schwenkgelenk (25) mit einer im Wesentlichen horizontalen Schwenkachse (26) an dem deichselfußnahen Bereich (18a) verschwenkbar gelagert ist, **dadurch gekennzeichnet, dass** der deichselkopfnahe Teil (18b) in einem Lagerbock (30) um die horizontale Schwenkachse (26) verschwenkbar gelagert ist, der das Schwenkgelenk (25) zwischen dem deichselfußnahen Teil (18a) und dem deichselkopfnahen Teil (18b) bildet und der über eine Parallelführungseinrichtung (31) mit dem Deichselfuß (16) gekoppelt ist.

2. Deichsel nach Anspruch 1, **dadurch gekennzeichnet, dass** der deichselkopfnahe Teil (18b) in dem Lagerbock (30) zwischen einem ersten Anschlag (60) für die abgesenkte Stellung des Deichselkopfes (20) und einem zweiten Anschlag (61) für die angehobene Stellung des Deichselkopfes (20) um die horizontale Schwenkachse (26) verschwenkbar ist.

3. Deichsel nach Anspruch 1 oder 2, **dadurch gekennzeichnet, dass** der deichselfußnahe Teil (18a) an dem Deichselfuß (16) zwischen einem ersten Anschlag (50) für eine kurze Deichsel (15) und einem zweiten Anschlag (51) für eine lange Deichsel (15) um die horizontale Schwenkachse (19) verschwenkbar gelagert ist.

4. Deichsel nach einem der Ansprüche 1 bis 3, **dadurch gekennzeichnet, dass** die Parallelführungseinrichtung (31) bei der Betätigung der Deichsel (15) zwischen der langen Stellung und der kurzen Stellung eine Parallelführung des Deichselkopfes (20) ermöglicht.

5. Deichsel nach einem der Ansprüche 1 bis 4, **dadurch gekennzeichnet, dass** die Parallelführungseinrichtung (30) von einem Zugmitteltrieb gebildet ist.

6. Deichsel nach Anspruch 5, **dadurch gekennzeichnet, dass** der Zugmitteltrieb als Kettentrieb gebildet ist mit einem an dem Deichselfuß (16) angeordneten Kettenrad (32) und einem an dem Lagerbock (30) angeordneten Kettenrad (34) sowie einer die beiden Kettenräder (32, 34) umschlingenden Kette (36).

7. Deichsel nach einem der Ansprüche 1 bis 6, **dadurch gekennzeichnet, dass** eine kraftschlüssige Arretierungsvorrichtung (71) zur Arretierung der Deichsel (15) in der kurzen Stellung und/oder der Deichsel (15) in der langen Stellung vorgesehen ist.

8. Deichsel nach Anspruch 7, **dadurch gekennzeichnet, dass** die kraftschlüssige Arretierungsvorrichtung (71) von einer Gasdruckfeder (70) gebildet ist, die mit einem ersten Ende an dem Deichselfuß (16) und mit einem zweiten Ende an dem Lagerbock (30) angelenkt ist.

9. Deichsel nach einem der Ansprüche 1 bis 8, **dadurch gekennzeichnet, dass** eine formschlüssige Arretierungsvorrichtung (75) zur Arretierung der Deichsel (15) in der kurzen Stellung und/oder der Deichsel (15) in der langen Stellung vorgesehen ist.

10. Deichsel nach Anspruch 9, **dadurch gekennzeichnet, dass** eine formschlüssige Arretierungsvorrichtung (75) einen an dem deichselfußnahen Teil (18a) angeordneten Rasthaken (76) umfasst, der mit einer Rastausnehmung (77) in dem Deichselfuß (16) zusammenwirkt.

11. Deichsel nach Anspruch 10, **dadurch gekennzeichnet, dass** der Rasthaken (76) federbeaufschlagt ist und mittels eines an dem deichselfußnahen Teil angeordneten Handhebels (79) betätigbar ist.

12. Deichsel nach einem der Ansprüche 1 bis 11, **dadurch gekennzeichnet, dass** der deichselfußnahe Teil (18a) zwei seitlich beabstandete Flanschplatten (41 a, 41 b) aufweist, mittels denen der deichselfußnahe Teil (18a) an dem Deichselfuß (16) verschwenkbar gelagert ist und in denen der Lagerbock (30) sowie der deichselkopfnahe Teil (18b) verschwenkbar gelagert ist.

13. Deichsel nach einem der Ansprüche 1 bis 12, **dadurch gekennzeichnet, dass** der Lagerbock (30) als Lagergabel ausgebildet ist, zwischen der der deichselkopfnahe Teil (18b) angeordnet ist, wobei die Anschläge (60; 61) von Querverstrebungen (62; 63) des Lagerbocks (30) gebildet sind.

14. Deichsel nach einem der Ansprüche 1 bis 13, **dadurch gekennzeichnet, dass** im Bereich des Lagerbocks (30) eine Sensoreinrichtung (85), insbesondere ein Tastschalter, zur Erfassung der angehobenen Stellung und/oder der abgesenkten Stellung des Deichselkopfes (20) angeordnet ist.

15. Deichsel nach einem der Ansprüche 1 bis 14, **dadurch gekennzeichnet, dass** im Bereich des Deichselfußes (16) eine Sensoreinrichtung (87), insbesondere ein Tastschalter, zur Erfassung der Stellung des deichselfußnahen Bereichs (18a) in der Stellung für die kurze Deichsel und/oder in der Stellung für die lange Deichsel angeordnet ist.

16. Deichselgeführtes Flurförderzeug, insbesondere Hubwagen, das zum wahlweisen Betrieb im Mitgängerbetrieb und Mitfahrerbetrieb ausgebildet ist und mit einer klappbaren Fahrerstandplattform (8) versehen ist sowie einer Deichsel (15) nach einem der vorangegangenen Ansprüche.

## Claims

1. Tiller (15) for a tiller-guided industrial truck (1), in particular lift truck, the tiller comprising a tiller foot (16), a tiller shaft (18) and a tiller head (20), wherein the tiller (15) is mounted on a driving part (2) of the industrial truck (1) by means of the tiller foot (16) so as to be pivotable about a substantially vertical pivot axis (17), and the tiller (15) is designed as a foldable tiller, for longitudinal adjustment, wherein the tiller shaft (18) has a two-part construction with a part (18a) in the vicinity of the tiller foot and a part (18b) in the vicinity of the tiller head, wherein the part (18a) in the vicinity of the tiller foot is mounted on the tiller foot (16) so as to be pivotable about a substantially horizontal pivot axis (19), and the part (18b) in the vicinity of the tiller head is mounted pivotably on the region (18a) in the vicinity of the tiller foot via a pivot joint (25) having a substantially horizontal pivot axis (26), **characterized in that** the part (18b) in the vicinity of the tiller head is mounted pivotably about the horizontal pivot axis (26) in a bearing block (30) which forms the pivot joint (25) between the part (18a) in the vicinity of the tiller foot and the part (18b) in the vicinity of the tiller head and which is coupled to the tiller foot (16) via a parallel-guide device (31).

2. Tiller according to Claim 1, **characterized in that** the part (18b) in the vicinity of the tiller head is pivotable in the bearing block (30) about the horizontal pivot axis (26) between a first stop (60) for the lowered position of the tiller head (20) and a second stop (61) for the raised position of the tiller head (20).

3. Tiller according to Claim 1 or 2, **characterized in that** the part (18a) in the vicinity of the tiller foot is mounted on the tiller foot (16) so as to be pivotable about the horizontal pivot axis (19) between a first stop (50) for a short tiller (15) and a second stop (51) for a long tiller (15).

4. Tiller according to one of Claims 1 to 3, **characterized in that** the parallel-guide device (31) permits parallel guidance of the tiller head (20) during actuation of the tiller (15) between the long position and the short position.

5. Tiller according to one of Claims 1 to 4, **characterized in that** the parallel-guide device (30) is formed by a traction mechanism drive.

6. Tiller according to Claim 5, **characterized in that** the traction mechanism drive is formed as a chain drive with a chain wheel (32) arranged on the tiller foot (16) and with a chain wheel (34) arranged on the bearing block (30) and with a chain (36) looping around the two chain wheels (32, 34).

7. Tiller according to one of Claims 1 to 6, **characterized in that** a frictional locking device (71) is provided for locking the tiller (15) in the short position and/or for locking the tiller (15) in the long position.

8. Tiller according to Claim 7, **characterized in that** the frictional locking device (71) is formed by a gas-filled compression spring (70) which is coupled by a first end to the tiller foot (16) and by a second end to the bearing block (30).

9. Tiller according to one of Claims 1 to 8, **characterized in that** a form-fitting locking device (75) is provided for locking the tiller (15) in the short position and/or for locking the tiller (15) in the long position.

10. Tiller according to Claim 9, **characterized in that** a form-fitting locking device (75) comprises a latching hook (76) which is arranged on the part (18a) in the vicinity of the tiller foot and interacts with a latching recess (77) in the tiller foot (16).

11. Tiller according to Claim 10, **characterized in that** the latching hook (76) is spring-loaded and is actuable by means of a hand lever (79) arranged on the part in the vicinity of the tiller foot.

12. Tiller according to one of Claims 1 to 11, **characterized in that** the part (18a) in the vicinity of the tiller foot has two laterally spaced-apart flange plates (41a, 41b), by means of which the part (18a) in the vicinity of the tiller foot is mounted pivotably on the tiller foot (16) and in which the bearing block (30) and the part (18b) in the vicinity of the tiller head are pivotably mounted.

13. Tiller according to one of Claims 1 to 12, **characterized in that** the bearing block (30) is designed as a bearing fork, between which the part (18b) in the vicinity of the tiller head is arranged, wherein the stops (60; 61) are formed by cross braces (62; 63) of the bearing block (30).

14. Tiller according to one of Claims 1 to 13, **characterized in that** a sensor device (85), in particular a touch contact switch, for detecting the raised position and/or the lowered position of the tiller head (20) is arranged in the region of the bearing block (30).

15. Tiller according to one of Claims 1 to 14, **characterized in that** a sensor device (87), in particular a touch contact switch, for detecting the position of the region (18a) in the vicinity of the tiller foot in the position for the short tiller and/or in the position for the long tiller is arranged in the region of the tiller foot (16).

16. Tiller-guided industrial truck, in particular lift truck, which is designed for optional operation in the pedestrian mode and stand-on mode and is provided with a foldable driver stand-on platform (8) and with a tiller (15) according to one of the preceding claims.

## Revendications

1. Timon (15) d'un chariot de manutention (1) guidé par timon, en particulier d'un chariot de levage, le timon comprenant une base de timon (16), un arbre de timon (18) et une tête de timon (20), le timon (15) étant monté sur une partie d'entraînement (2) du chariot de manutention (1) au moyen de la base de timon (16) de manière à pouvoir pivoter autour d'un axe de pivotement (17) essentiellement vertical, et le timon (15) étant réalisé de manière à pouvoir être réglé longitudinalement en tant que timon rabattable, l'arbre de timon (18) présentant une structure en deux parties avec une partie proche de la base de timon (18a) et une partie proche de la tête de timon (18b), la partie proche de la base de timon (18a) étant montée sur la base de timon (16) de manière à pouvoir pivoter autour d'un axe de pivotement (19) essentiellement horizontal et la partie proche de la tête de timon (18b) étant montée de manière à pouvoir pivoter sur la région proche de la base de timon (18a) par le biais d'une articulation pivotante (25) avec un axe de pivotement essentiellement horizontal (26), **caractérisé en ce que** la partie proche de la tête de timon (18b) est montée dans un coussinet (30) de manière à pouvoir pivoter autour de l'axe de pivotement horizontal (26), lequel coussinet forme l'articulation pivotante (25) entre la partie proche de la base de timon (18a) et la partie proche de la tête de timon (18b) et est accouplé à la base de timon (16) par le biais d'un dispositif de guidage parallèle (31).

2. Timon selon la revendication 1, **caractérisé en ce que** la partie proche de la tête de timon (18b) dans le coussinet (30) peut pivoter autour de l'axe de pivotement horizontal (26) entre une première butée (60) pour la position renfoncée de la tête de timon (20) et une deuxième butée (61) pour la position rehaussée de la tête de timon (20).

3. Timon selon les revendications 1 ou 2, **caractérisé en ce que** la partie proche de la base de timon (18a) est montée sur la base de timon (16) de manière à pouvoir pivoter autour de l'axe de pivotement horizontal (19) entre une première butée (50) pour un timon court (15) et une deuxième butée (51) pour un timon long (15).

4. Timon selon l'une quelconque des revendications 1 à 3, **caractérisé en ce que** le dispositif de guidage parallèle (31), lors de l'actionnement du timon (15) entre la position longue et la position courte, permet un guidage parallèle de la tête de timon (20).

5. Timon selon l'une quelconque des revendications 1 à 4, **caractérisé en ce que** le dispositif de guidage parallèle (30) est formé par un entraînement à moyen de traction.

6. Timon selon la revendication 5, **caractérisé en ce que** l'entraînement à moyen de traction est réalisé sous forme d'entraînement à chaîne avec une roue dentée (32) disposée sur la base de timon (16) et une roue dentée (34) disposée sur le coussinet (30) ainsi qu'une chaîne (36) enveloppant les deux roues dentées (32, 34).

7. Timon selon l'une quelconque des revendications 1 à 6, **caractérisé en ce qu'**il est prévu un dispositif de blocage par engagement par force (71) pour le blocage du timon (15) dans la position courte et/ou du timon (15) dans la position longue.

8. Timon selon la revendication 7, **caractérisé en ce que** le dispositif de blocage par engagement par force (71) est formé par un ressort de pression à gaz (70), qui est articulé par une première extrémité à la base de timon (16) et par une deuxième extrémité au coussinet (30).

9. Timon selon l'une quelconque des revendications 1 à 8, **caractérisé en ce qu'**un dispositif de blocage par engagement positif (75) est prévu pour le blocage du timon (15) dans la position courte et/ou du timon (15) dans la position longue.

10. Timon selon la revendication 9, **caractérisé en ce qu'**un dispositif de blocage par engagement positif (75) comprend un crochet d'encliquetage (76) disposé au niveau de la partie proche de la base de timon (18a), lequel coopère avec un évidement d'encliquetage (77) dans la base de timon (16).

11. Timon selon la revendication 10, **caractérisé en ce que** le crochet d'encliquetage (76) est sollicité par ressort et peut être actionné au moyen d'un levier à main (79) disposé sur la partie proche de la base de timon.

12. Timon selon l'une quelconque des revendications 1 à 11, **caractérisé en ce que** la partie proche de la base de timon (18a) présente deux plaques à brides espacées latéralement (41a, 41b), au moyen desquelles la partie proche de la base de timon (18a) est montée de manière à pouvoir pivoter sur la base de timon (16) et dans lesquelles le coussinet (30) ainsi que la partie proche de la tête de timon (18b) sont montés de manière à pouvoir pivoter.

13. Timon selon l'une quelconque des revendications 1 à 12, **caractérisé en ce que** le coussinet (30) est réalisé sous forme de fourche de palier, entre laquelle la partie proche de la tête de timon (18b) est disposée, les butées (60 ; 61) étant formées par des entretoises transversales (62 ; 63) du coussinet (30).

14. Timon selon l'une quelconque des revendications 1 à 13, **caractérisé en ce que** dans la région du coussinet (30) est disposé un dispositif de capteur (85), en particulier un commutateur à touche, pour détecter la position rehaussée et/ou la position renfoncée de la tête de timon (20).

15. Timon selon l'une quelconque des revendications 1 à 14, **caractérisé en ce qu'**un dispositif de capteur (87), en particulier un commutateur à touche, est disposé dans la région de la base de timon (16) pour détecter la position de la région proche de la base de timon (18a) dans la position pour le timon court et/ou dans la position pour le timon long.

16. Chariot de manutention guidé par timon, en particulier chariot élévateur, qui est réalisé pour un fonctionnement sélectif en mode à conducteur accompagnant et à conducteur porté, et qui est pourvu d'une plate-forme de conducteur rabattable (8) ainsi que d'un timon (15) selon l'une quelconque des revendications précédentes.
